(19) Europäisches Patentamt
European Patent Office
Office européen des brevets

(11) **EP 2 574 904 B1**

(12) **EUROPÄISCHE PATENTSCHRIFT**

(45) Veröffentlichungstag und Bekanntmachung des Hinweises auf die Patenterteilung:
**12.03.2014 Patentblatt 2014/11**

(51) Int Cl.:
***G01N 11/00*** (2006.01)   ***G05D 24/00*** (2006.01)

(21) Anmeldenummer: **12177248.7**

(22) Anmeldetag: **20.07.2012**

(54) **Viskositätsgesteuerte Verarbeitung eines flüssigen Lebensmittels**

Viscosity-controlled processing of a liquid foodstuff

Traitement réglé par viscosité d'un aliment liquide

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2011 DE 102011083881**

(43) Veröffentlichungstag der Anmeldung:
**03.04.2013 Patentblatt 2013/14**

(73) Patentinhaber: **Krones AG**
**93073 Neutraubling (DE)**

(72) Erfinder: **Zacharias, Jörg**
**93096 Köfering (DE)**

(74) Vertreter: **Grünecker, Kinkeldey, Stockmair & Schwanhäusser**
**Leopoldstrasse 4**
**80802 München (DE)**

(56) Entgegenhaltungen:
**WO-A1-01/57492    WO-A1-99/06816**
**US-B1- 6 343 501**

## Beschreibung

### Gebiet der Erfindung

Die vorliegende Erfindung betrifft das Steuern oder Regeln der Verarbeitung eines flüssigen Lebensmittelprodukts, insbesondere eines Frucht- oder Gemüsesaftes, wobei bei der Verarbeitung des flüssigen Lebensmittelprodukts die Viskosität desselben berücksichtigt werden muss. Ein Verfahren zur Erfassung der Viskosität wird in der Druckschrift WO 99/06816 gezeigt.

### Stand der Technik

Bei der Verarbeitung von Flüssigkeiten spielt häufig die Viskosität dieser Flüssigkeiten eine wichtige Rolle. Beispielsweise muss die Viskosität in Transportprozessen aufgrund ihres Einflusses auf die Grenzschichtprozesse berücksichtigt werden. Die Arbeitsweise der Prozesstechnik wie hydraulischer Transport mittels Pumpen, Wärmeübertragungstechnik, Mischprozesse, Trenntechnik bis hin zur Produktabfüllung werden durch die Viskosität der Flüssigkeiten entscheidend beeinflusst. Von besonderer Bedeutung ist die Berücksichtigung der Viskosität im Zusammenhang mit der Verarbeitung flüssiger Lebensmittelprodukte, wie beispielsweise Frucht- oder Gemüsesäfte, Milch oder Bier. Bei der Pasteurisierung flüssiger Lebensmittel durch Kurzzeiterhitzer muss die Viskosität des zu pasteurisierenden flüssigen Lebensmittelprodukts bei der Dimensionierung des Wärmetauschers, beispielsweise der Heizplatten oder Heizrohre, berücksichtigt werden. Wird viskositätsbedingt die für eine erfolgreiche Pasteurisierung benötigte Fläche des Wärmetauschers unterschritten, wird das verarbeitete flüssige Lebensmittelprodukt nicht hinreichend erhitzt oder abgekühlt.

Die Viskosität stellt jedoch eine im Betrieb einer Anlage zur Verarbeitung eines flüssigen Lebensmittelprodukts schwer ermittelbare Messgröße dar. Besonders schwierig gestaltet sich die Bestimmung der Viskosität nicht-newtonscher, insbesondere strukturviskoser Medien, da diese eine relativ starke Abhängigkeit der Viskosität von der Schergeschwindigkeit (Scherrate) insbesondere bei relativ kleinen Schergeschwindigkeiten zeigen. Während im Labor (Off-Line) Viskositäten beispielsweise mithilfe von Rotationsrheometern für verschiedene Schwergeschwindigkeiten gemessen werden können, ist es im Betrieb einer Anlage (On-Line) sehr schwierig, Messwerte für die Viskosität für verschiedene im Betrieb auftretende Schergeschwindigkeiten flüssiger Lebensmittelprodukte zu erhalten.

Es ist im Stand der Technik bekannt, die Viskosität eines flüssigen Lebensmittelprodukts bei relativ hohen Scherraten von größer als 1000 $s^{-1}$ On-Line zu bestimmen. Mit hoher Verlässlichkeit gelingt dieses für newtonsche Medien beispielsweise mithilfe des Promass 83 I der Firma Endress + Hauser GmbH und Co.KG. Für niedrigere Scherraten und strukturviskose Medien, wie insbesondere Frucht- und Gemüsesäften, ist jedoch die Bestimmung der Viskosität und vor allem eine Steuerung oder Regelung einer Anlage zur Verarbeitung der Medien auf der Grundlage der bestimmten Viskosität nicht bekannt. Es liegt somit der vorliegenden Erfindung eine Aufgabe dahingehend zugrunde, dass ein Verfahren zur Steuerung oder Regelung der Verarbeitung flüssiger Lebensmittelprodukte bereitgestellt werden soll, die die Viskosität der flüssigen Lebensmittelprodukte an einer Arbeitsvorrichtung innerhalb einer Prozesslinie berücksichtigt, die normalerweise nicht in dem Scherratenbereich der Messstelle oder des Messgerätes liegt.

### Beschreibung der Erfindung

Die oben genannte Aufgabe wird durch das Verfahren gemäß Anspruch 1 gelöst. Das beanspruchte Verfahren zur Steuerung oder Regelung der Verarbeitung eines flüssigen Lebensmittelprodukts umfasst die Schritte

Bereitstellen von Daten, die aus einer mathematischen Modellierung der Abhängigkeit der Viskosität flüssiger Lebensmittelprodukte von der Schergeschwindigkeit gewonnen werden;

Messen der Viskosität des zu verarbeitenden flüssigen Lebensmittelprodukts bei einer vorbestimmten Schergeschwindigkeit an einer Messstelle; und

Steuern oder Regeln der Verarbeitung des flüssigen Lebensmittelprodukts an einer Arbeitsvorrichtung stromabwärts der Messstelle (in einer Prozesslinie der Messstelle nachgeschaltet) in Reaktion auf die an der Messstelle gemessene Viskosität und auf der Grundlage der bereitgestellten Daten.

Bei der Verarbeitung von flüssigen Lebensmittelprodukten muss i.a. die Viskosität des zu verarbeitenden flüssigen Lebensmittelprodukts an der Arbeitsvorrichtung berücksichtigt werden, um eine fehlerfreie Verarbeitung gewährleisten zu können. Die Arbeitsvorrichtung kann beispielsweise eine Kurzzeit-Erhitzungseinrichtung und das flüssige Lebensmittelprodukt kann ein Frucht- oder Gemüsesaft sein.

In einer Prozesslinie wird an einer Messstelle die Viskosität des zu verarbeitenden flüssigen Lebensmittelprodukts gemessen. Für das fehlerfreie Arbeiten der Arbeitsvorrichtung ist jedoch nicht die Viskosität an der Messstelle relevant, sondern die Viskosität an der Arbeitsvorrichtung selbst. Hier ist aber eine direkte Messung der Viskosität nicht möglich. Andererseits liegt an der Arbeitsvorrichtung eine Schergeschwindigkeit vor, die von derjenigen an der Messstelle verschieden ist.

Zudem ist es möglich, dass das Messgerät nicht die tatsächliche Viskosität gemäß der vorliegenden Scherrate misst, sondern durch sein inhärentes Messprinzip in einem weiter abweichenden aber bekannten Scherratenbereich misst.

Es wird erfindungsgemäß ein Datensatz bereitgestellt, der eine Beziehung von der Viskosität zu der Schergeschwindigkeit für eine Anzahl an Proben von flüssigen Lebensmittelprodukten darstellt. Beispielsweise kann der Datensatz eine Schar von Kurven von Viskosität versus Schergeschwindigkeit oder Parametrisierungen solcher Kurven aufweisen. Auch können die Daten rheologische Parameter, die einzelne flüssige Lebensmittelprodukte charakterisieren, umfassen. Die für das zu verarbeitende flüssige Lebensmittelprodukt gemessene Viskosität lässt sich in Bezug setzen zu den bereitgestellten Daten. Beispielsweise kann ein bestimmtes strukturviskoses Modell den Daten zugrunde gelegt werden und ebenso auf das zu verarbeitende flüssige Lebensmittelprodukt angewendet werden. So können beispielsweise ausgehend von dem einem Messwert durch Abgleich mit gespeicherten Daten für ein flüssiges Lebensmittelprodukt mit einem vergleichbaren Wert der Viskosität bei der vorbestimmten Schergeschwindigkeit Informationen über die Viskosität des zu verarbeitenden flüssigen Lebensmittelprodukts an der Arbeitsvorrichtung gewonnen werden (s. auch detaillierte Beschreibung unten).

Die Temperaturabhängigkeit der Viskosität stellt einen weiteren Freiheitsgrad des Datensatzes zur Charakterisierung eines flüssigen Lebensmittelproduktes dar.

Auf der Grundlage dieses Datensatzes und der bei der vorbestimmten Schergeschwindigkeit gemessenen Viskosität des zu verarbeitenden flüssigen Lebensmittelprodukts kann die Arbeitsvorrichtung gesteuert oder geregelt werden. Details hierzu werden im Weiteren beschrieben. Jedenfalls stellt das erfindungsgemäße Verfahren den Vorteil bereit, dass Fehler bei der Verarbeitung des flüssigen Lebensmittelprodukts vermieden werden können, da die Viskosität des flüssigen Lebensmittelprodukts prinzipiell berücksichtigt werden kann, obgleich sie einer direkten Messung an der Arbeitsvorrichtung nicht zugänglich ist. Beispielsweise kann ein Abschalten der Arbeitsvorrichtung erfolgen, wenn dies als notwendig angesehen wird.

Gemäß einer Weiterbildung wird die Modellierung auf der Grundlage von Messungen der Viskosität der flüssigen Lebensmittelprodukte für zumindest eine Schergeschwindigkeit durchgeführt. Es werden also die Daten aufgrund von Viskositätsmessungen und einer Modellbeschreibung der Viskosität von flüssigen Lebensmittelprodukten in Abhängigkeit von der Schergeschwindigkeit gewonnen. Die Messungen können im Labor beispielsweise mithilfe eines Rotationsrheometers erfolgen. Es sei betont, dass das zu verarbeitende flüssige Lebensmittelprodukt nicht mit einem der flüssigen Lebensmittelprodukte identisch zu sein braucht, für das die Daten, die aus einer mathematischen Modellierung der Abhängigkeit der Viskosität flüssiger Lebensmittelprodukte von der Schergeschwindigkeit gewonnen werden, bereitgestellt werden, bzw. für das die Modellierung auf der Grundlage von Messungen der Viskosität für zumindest eine Schergeschwindigkeit durchgeführt wird.

Die Modellierung selbst kann auf der Grundlage der Cox-Merz-Beziehung erfolgen. Diese erlaubt insbesondere die Bestimmung der Viskosität als Funktion von der Schergeschwindigkeit aus Oszillationsmessungen der Viskosität (Schergeschwindigkeit = Kreisfrequenz der in der Oszillationsmessung angelegten Oszillation). Gemäß der Cox-Merz-Beziehung stimmt die Scherviskosität bei gleicher Schergeschwindigkeit und Kreisfrequenz gut mit dem Betrag der komplexen Viskosität überein.

Im Allgemeinen können strukturviskose flüssige Lebensmittel durch eine ganze Reihe mathematischer Modelle mit und ohne Fließgrenze beschrieben werden. Diese werden auch Viskositätsfunktion oder Fließkurve genannt. Die Fliesskurven mit der besten Korrelation für Säfte sind diejenigen nach Casson, Bingham, Herschel-Bulkley oder Ostwald-de-Waele.

Insbesondere kann die Modellierung gemäß der Ostwald-de-Waele-Beziehung $\eta = K\dot{\gamma}^{m-1}$ erfolgen, wobei $\eta$ und $\dot{\gamma}$ die Viskosität und Schergeschwindigkeit bezeichnen und K und m die Konsistenz und den Fließindex bezeichnen. In diesem Fall können die Daten, auf Grundlage derer das Steuern oder Regeln der Verarbeitung des flüssigen Lebensmittelprodukts an der Arbeitsvorrichtung erfolgt, Werte für m (und möglicherweise K) für eine Mehrzahl an flüssigen Lebensmittelprodukten umfassen, wobei das Verfahren das Bestimmen des Wertes von m für das flüssige Lebensmittelprodukt umfasst und das Steuern oder Regeln auf der Grundlage des bestimmten Wertes von m (und möglicherweise K) für das flüssige Lebensmittelprodukt erfolgt (s. detaillierte Beschreibung unten).

Die Ostwald-de-Waele-Beziehung ist besonders zur Beschreibung der Beziehung von Viskosität und Schergeschwindigkeit fließender Frucht- oder Gemüsesäfte geeignet.

Es können insbesondere Rezepturen bereitgestellt werden, die Informationen über Grenzprodukte enthalten, z. B. Werte für m und K. Die Datenwerte für die Grenzprodukte können einen Parameterraum aufspannen, der Parameterbereiche definiert, für die eine fehlerfreie Verarbeitung möglich ist.

Gemäß einer Weiterbildung kann die Verarbeitung des flüssigen Lebensmittelprodukts an der Arbeitsvorrichtung gestoppt werden, wenn der bestimmte Wert für m für das flüssige Lebensmittelprodukt eine erste vorbestimmte Schranke überschreitet und/oder eine zweite vorbestimmte Schranke unterschreitet. So kann insbesondere verhindert werden, dass Ausschussware produziert wird oder eine wiederholte Verarbeitung erforderlich wird. Die bereitgestellten Daten können Datensätze für Rezepturen für verschiedene Arten von flüssigen Lebensmittelprodukten umfassen. Jeder Datensatz umfasst hierbei obere und untere Schranken entsprechend Grenzprodukten. Die erste und zweite vorbestimmte Schranke können aus einem der Datensätze ausgelesen werden.

Ganz allgemein kann in den oben beschriebenen Beispielen für das erfindungsgemäße Verfahren in Reaktion auf das Messen der Viskosität des flüssigen Lebensmittelprodukts ein Volumenstrom des flüssigen Lebensmittelprodukts erhöht oder vermindert werden und/oder ein Druck des Volumenstroms des flüssigen Lebensmittelprodukts erhöht oder vermindert werden. Zusätzlich oder alternativ kann das flüssige Lebensmittelprodukts in Reaktion auf das Messen der Viskosität des flüssigen Lebensmittelprodukts verdünnt oder verdickt werden. Beispielsweise kann auf der Grundlage der Viskositätsmessung und der bereitgestellten Daten bestimmt werden, dass die Viskosität eines an einer Kurzzeit-Erhitzungsvorrichtung (als Arbeitsvorrichtung) zu pasteurisierenden Fruchtsafts (als flüssiges Lebensmittelprodukt) so niedrig ist, dass eine hinreichende Erhitzung und ggf. anschließendes Abkühlen durch die Dimensionierung der Platten oder des Rohrs der Kurzzeit-Erhitzungsvorrichtung nicht gewährleistet ist. Das erforderliche Temperaturprofil wird in diesem Fall nicht erreicht. In diesem Fall kann in Reaktion darauf der Saft verdickt werden (erhöhter Fruchtanteil) oder der Volumenstrom oder Druck verringert werden. Ebenso kann On-Line auf Druckverluste, beispielsweise durch Anpassen /Steuern/Regeln) des Volumenstroms des zu verarbeitenden flüssigen Lebensmittelprodukts, reagiert werden.

Wie aus der obigen Darlegung hervorgeht, spielt in der vorliegenden Anmeldung die Berücksichtigung der Abhängigkeit der Viskosität flüssiger Lebensmittelprodukte von der Schergeschwindigkeit eine wichtige Rolle. Die Viskosität des zu verarbeitenden flüssigen Lebensmittelprodukts wird bei einer vorbestimmten Schergeschwindigkeit gemessen. Gemäß der beispielhaften Ostwald-de-Waele-Beziehung beispielsweise lässt sich aus dieser Messung auf die Viskosität bei einer von der vorbestimmten verschiedenen Schergeschwindigkeit schließen. Die lokal vorliegende mittlere Schergeschwindigkeit eines flüssigen Lebensmittelprodukts kann beispielsweise gemäß der Näherungsformel für einen Rohrleitungstransport

$$\bar{\dot{\gamma}} = \frac{4 \, \dot{V}}{\pi \, R^3}$$

erfolgen. Sie beschreibt insbesondere die Scherrate an der für den Wärmeübergang entscheidenden Rohrwand. Die mit dieser Formel berechnete mittlere Schergeschwindigkeit $\bar{\dot{\gamma}}$ ist also eine Funktion des Volumenstromes $\dot{V}$ sowie der vorliegenden Geometrie des Rohrleitungssystems, wie sie durch den Radius R des Rohres angegeben ist.

Die oben genannte Aufgabe wird auch gelöst durch eine Steuer- oder Regelvorrichtung für eine Anlage zur Verarbeitung eines flüssigen Lebensmittelprodukts, umfassend
einen Datenspeicher zum Speichern von Daten, die aus einer mathematischen Modellierung der Abhängigkeit der Viskosität flüssiger Lebensmittelprodukte von der Schergeschwindigkeit gewonnen werden (z.B. wie oben im Zusammenhang mit dem erfindungsgemäßen Verfahren beschrieben); und
eine Steuereinheit zum Steuern oder Regeln der Verarbeitung des flüssigen Lebensmittelprodukts an einer Arbeitsvorrichtung stromabwärts einer Messstelle in Reaktion auf eine an der Messstelle bei einer vorbestimmten Schwergeschwindigkeit gemessenen Viskosität des zu verarbeitenden Lebensmittelprodukts und auf der Grundlage der gespeicherten Daten.

Ebenso wird die oben genannte Aufgabe gelöst durch eine Verarbeitungsvorrichtung, insbesondere eine Kurzzeit-Erhitzungsvorrichtung, für die Verarbeitung eines flüssigen newtonschen oder strukturviskosen Lebensmittelprodukts, insbesondere eines Frucht- oder Gemüsesafts, umfassend
eine Messstelle zum Messen der Viskosität des flüssigen Lebensmittelprodukts bei einer vorbestimmten Schergeschwindigkeit des flüssigen Lebensmittelprodukts;
eine Arbeitsvorrichtung zum Verarbeitung des flüssigen Lebensmittelprodukts, wobei die Arbeitsvorrichtung stromabwärts der Messstelle vorgesehen ist; und
die oben genannte Steuer- oder Regelvorrichtung.

In der genannten Vorrichtung können sämtliche Ausführungsformen des oben beschriebenen Verfahrens implementiert sein.

In sämtlichen oben genannten Beispielen kann es sich bei dem flüssigen Lebensmittelprodukt auch um eine (stückige) Suspension oder Pulpe oder Maische oder Fasern beinhaltende Flüssigkeit handeln. Auch kann es sich um flüssige Lebensmittelprodukte mit definierten Fließgrenzen handeln. Auch Suspensionen, die zu Wandgleiteffekten neigen, können dadurch erfasst werden.

Nach dem oben beschriebenen ist es prinzipiell möglich, die Viskosität eines zu verarbeitenden flüssigen Lebensmittelprodukts an der Messstelle bei vorbestimmter Schergeschwindigkeit zu messen und dann auf die Viskosität an der Arbeitsvorrichtung unter Kenntnis der dort vorliegenden Schergeschwindigkeit zu schließen. Somit wird auch bereitgestellt ein Verfahren zum Bestimmen der Viskosität eines flüssigen Lebensmittelprodukts an einer Arbeitsvorrichtung zum Verarbeiten des flüssigen Lebensmittelprodukts, die Schritte umfassend

Bereitstellen von Daten, die aus einer mathematischen Modellierung der Abhängigkeit der Viskosität flüssiger Lebensmittelprodukte von der Schergeschwindigkeit (beispielsweise auf der Grundlage der Ostwald-de-Waele-Beziehung) gewonnen werden;

Messen der Viskosität des flüssigen Lebensmittelprodukts bei einer vorbestimmten Schergeschwindigkeit des flüssigen Lebensmittelprodukts an einer Messstelle; und

Bestimmen der Viskosität des flüssigen Lebensmittelprodukts bei einer zweiten Schergeschwindigkeit des flüssigen Lebensmittelprodukts, die von der vorbestimmten Schergeschwindigkeit verschieden ist, auf der Grundlage der gespeicherten Daten.

In Reaktion auf die so bestimmte Viskosität kann die Steuerung der Arbeitsvorrichtung erfolgen.

Im folgenden werden Ausführungsformen eines erfindungsgemäßen Verfahrens unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

Figur 1 veranschaulicht eine Prozesslinie mit einer Messvorrichtung zum Messen der Viskosität eines flüssigen Lebensmittels, einer Arbeitsvorrichtung zur Verarbeitung des flüssigen Lebensmittels und einer Steuervorrichtung zur Steuerung der Arbeitsvorrichtung.

Figur 2 zeigt beispielhaft Messergebnisse für die Viskosität einer Xanthan-Probe in Abhängigkeit von der Schergeschwindigkeit in doppelt-logarithmischer Darstellung sowie eine Ausgleichsgerade zur Bestätigung der Ostwald-de-Waele-Beziehung.

Figur 3 zeigt für beispielhafte Grenzprodukte die Ostwald-de-Waele-Beziehung für entsprechende Fließindices $m_{oben}$ und $m_{unten}$ der Grenzprodukte.

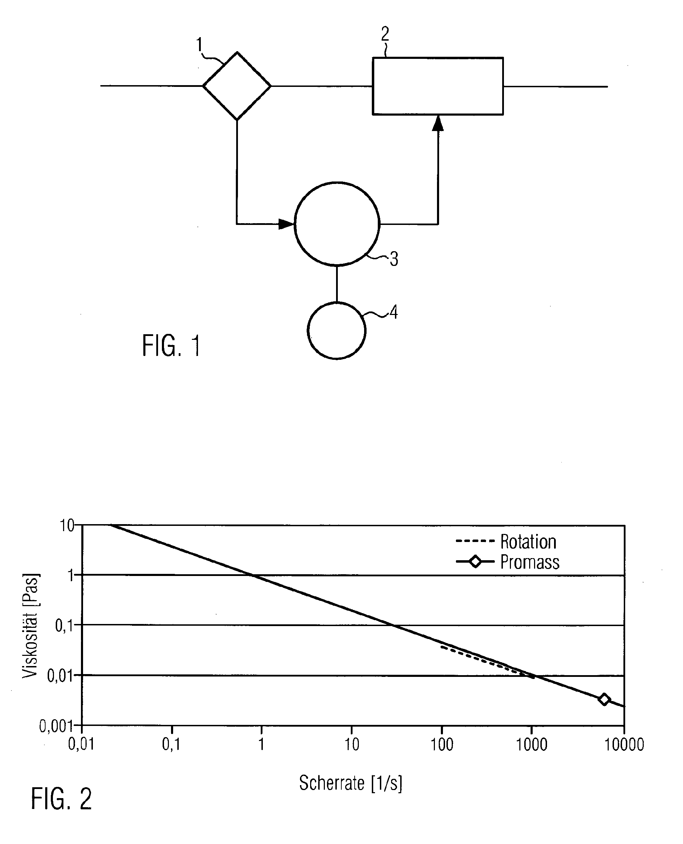

In Figur 1 wird eine Prozesslinie mit einer Messvorrichtung 1 zum Messen der Viskosität eines flüssigen Lebensmittels, einer Arbeitsvorrichtung 2 zur Verarbeitung des flüssigen Lebensmittels und einer Steuervorrichtung 3 zur Steuerung der Arbeitsvorrichtung basierend auf einerseits dem gemessenen Viskositätswerts und andererseits von Daten, die in einem Datenspeicher 4 gespeichert sind, veranschaulicht. In der gezeigten Ausführungsform kann es sich bei dem flüssigen Lebensmittel um einen Fruchtsaft und bei der Arbeitsvorrichtung 2 um eine Kurzzeit-Erhitzungsvorrichtung oder Ultra-Hocherhitzungsvorrichtung handeln, die der Pasteurisierung des Fruchtsafts dient. Im weiteren wird beispielhaft angenommen, dass es sich bei der Arbeitsvorrichtung 2 um eine Kurzzeit-Erhitzungsvorrichtung (KZE) handelt, die der Erhitzung von Fruchtsaft dient. Die Erfindung ist freilich nicht auf eine so spezifizierte Arbeitsvorrichtung 2 bzw. auf ein so spezifiziertes flüssiges Lebensmittelprodukt beschränkt.

Die Dimensionierung der KZE ist prinzipiell von der Viskosität des zu behandelnden flüssigen Lebensmittels abhängig. Bei Auslieferung an einen Abnehmer wird die KZE, sei es ein Plattenwärmetauscher oder ein Rohrwärmetauscher, für typische Anwendungen dimensioniert. Es ist jedoch nicht auszuschließen, dass der Abnehmer eine Prozesslinie mit dem KZE für Säfte betreibt, deren Viskosität keine hinreichende Erhitzung durch den KZE erlaubt. Die vorliegende Erfindung dient unter anderem dazu, in einem solchen Fall das Produzieren von Ausschussware zu vermeiden.

Die Viskosität des zu pasteurisierenden Safts wird an der Messvorrichtung 1 bei vorbestimmter Schergeschwindigkeit gemessen. Eine solche Messung kann beispielsweise mithilfe des Promass 83 I der Firma Endress + Hauser GmbH und Co.KG erfolgen. Beispielsweise kann die vorbestimmte Schergeschwindigkeit, bei der die Viskositätsmessung vorgenommen wird, 5000 s⁻¹ betragen. Die gemessene Viskosität wird der Steuervorrichtung 3 eingegeben. Diese hat Zugriff auf den Datenspeicher 4, der Daten über eine Mehrzahl an flüssigen Lebensmittelprodukten speichert, die von dem betrachteten zu verarbeitende flüssigen Lebensmittelprodukt (insbesondere in strukturviskoser Hinsicht) verschieden sein können. Die Daten basieren auf einer Modellierung der flüssigen Lebensmittelprodukte, die eine Beziehung zwischen ihrer jeweiligen Viskosität und Schergeschwindigkeit beschreibt. Im vorliegenden Beispiel werden die Daten also für eine Anzahl an Fruchtsäften erhoben und vor Inbetriebnahme der Prozesslinie in dem Datenspeicher 4 abgelegt.

Insbesondere können in dem Datenspeicher 4 Rezepturen für verschiedene Säfte oder Saftarten abgelegt sein, die jeweils eine Mehrzahl an flüssigen Lebensmittelprodukten charakterisieren, wobei sie Werte für Grenzprodukte derart umfassen, dass diese Werte einen Parameterbereich definieren, innerhalb dessen ein fehlerfreies Verarbeiten an der Arbeitsvorrichtung 2 ermöglicht wird.

Genauer findet in diesem Beispiel die Ostwald-de-Waele-Beziehung $\eta = K \dot{\gamma}^{m-1}$, wobei $\eta$ und $\dot{\gamma}$ die Viskosität und Schergeschwindigkeit bezeichnen und $K$ und $m$ die Konsistenz und den Fließindex bezeichnen, Anwendung. Es werden rotationsrheometrisch für eine Anzahl an Fruchtsäften $K$ und $m$ bestimmt. Hierzu erfolgen für jede Saftprobe Messungen von zumindest der Viskosität bei mehreren Schergeschwindigkeiten, woraus sich dann unter der Annahme der Gültigkeit der Ostwald-de-Waele-Beziehung die rheologischen Parameter $K$ und $m$ bestimmen lassen, die die strukturviskosen Eigenschaften der Säfte maßgeblich bestimmen.

Figur 2 zeigt ein Beispiel für Messungen in doppelt-logarithmischer Darstellung und die resultierende Ausgleichsgerade am Beispiel einer Xanthan-Probe. Xanthan ist ein gängiger Inhaltstoff von Getränken und zeigt ähnliche Fliesseigenschaften wie viele Säfte. Gezeigt sind Messwerte, die aus rotationsrheometrischen Messungen für Schergeschwindigkeiten im prozesstechnisch relevanten Bereich von ca. 100 bis ca. 1000 s⁻¹ gewonnen wurden, und einen Messwert einer Messung mithilfe des Promass 83 I (Promass-Messung), die bei einer Schergeschwindigkeit von 5000 s⁻¹ vorgenommen wurde. Aus der Steigung der Ausgleichsgeraden kann der Fließindex $m$ eindeutig bestimmt werden. $K$ und $m$ werden für sämtliche Saftproben gespeichert, für die die KZE eine hinreichende Pasteurisierung garantieren kann.

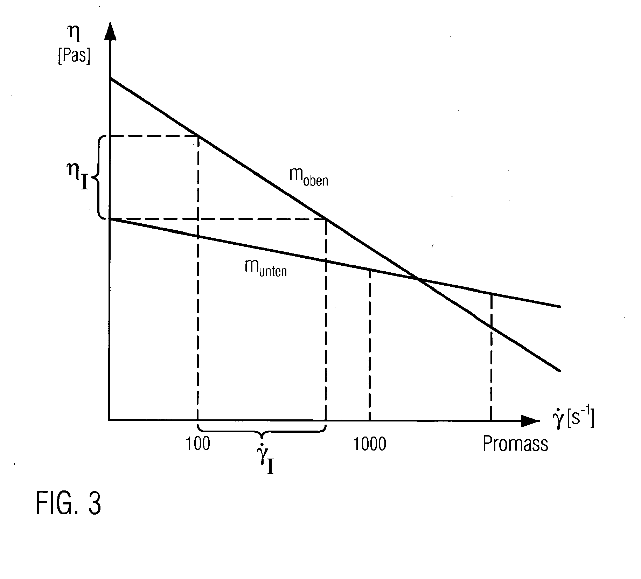

Figur 3 zeigt (nicht maßstablich) beispielhaft die Abhängigkeit der Viskosität von der Schergeschwindigkeit für experimentell bestimmte Grenzprodukte einer ausgewählten Rezeptur, für die die KZE soeben noch zuverlässig arbeitet. Es ergeben sich eine maximale Steigung $m_{oben}$ und eine minimale Steigung $m_{unten}$, die einem Viskositätsintervall $\eta_I$ entsprechen, in dem für realistischerweise auftretende Schergeschwindigkeiten im Intervall $\dot{\gamma}_I$, die von der Ausbildung der Arbeitsvorrichtung 4 und typischerweise aufgebrachten Volumenströmen abhängen, an der Arbeitsvorrichtung 4 Viskositäten auftreten, für die eine fehlerfreie Verarbeitung garantiert werden kann. Liegen Viskositäten oberhalb des Intervalls $\dot{\gamma}_I$ vor, kommt es zu einer Überhitzung. Für Viskositäten unterhalb des Intervalls $\dot{\gamma}_I$ kommt es zu nicht hinreichenden Erwärmung. Wird nun basierend auf der Messung der Viskosität des zu verarbeitenden flüssigen Lebensmittelprodukts ein Wert für m bestimmt, der oberhalb von $m_{oben}$ oder unterhalb von $m_{unten}$ liegt, kann die Prozesslinie, insbesondere die Pasteurisierung an der KZE gestoppt werden. Alternativ kann der Volumenstrom bzw. der Druck oder die Verdünnung/Verdickung des flüssigen Lebensmittelprodukts gesteuert bzw. geregelt werden, so dass sich die Viskosität des zu verarbeitenden flüssigen Lebensmittelprodukts an der KZE ändert bis diese fehlerfrei arbeiten kann. Eine analoge Verfahrensweise kann im Fall einer Abkühlung des flüssigen Lebensmittelprodukts Verwendung finden.

Im einfachsten Fall könnte ein Betreiber der Prozesslinie K und m eines zu verarbeitenden flüssigen Lebensmittelprodukts der Steuervorrichtung 3 eingeben, die dann über ein direkten Abgleich der gespeicherten m Werte bestimmen kann, ob sich das zu verarbeitende flüssige Lebensmittelprodukt zur Pasteurisierung mithilfe der KZEs eignet. Im Allgemeinen wird der Betreiber keine Kenntnis über die genauen rheologischen Parameter haben. Es wird also die Viskosität durch eine Promass-Messung mithilfe der Messvorrichtung 1 gemessen. Durch Abgleich mit den in dem Datenspeicher 4 gespeicherten Daten kann die Steuervorrichtung 3, insbesondere nach Vorauswahl einer Rezeptur, entscheiden, ob das fragliche flüssige Lebensmittelprodukt, hier der Fruchtsaft, für die Verarbeitung durch die Arbeitsvorrichtung 2, hier die KZE, geeignet ist. Beispielsweise kann ermittelt werden, welcher gespeicherte Viskositätswert für die vorbestimmte Schergeschwindigkeit, bei der die Messvorrichtung 1 die Viskositätsmessung vornimmt, hier also z.B. 5000 s$^{-1}$, dem durch die Messvorrichtung 1 gemessenen Viskositätswert am nächsten kommt. Liegt der entsprechende m-Wert der zu diesem Viskositätswert passenden Gerade in dem Viskositäts-Schergeschwindigkeits-Diagramm zwischen $m_{unten}$ und $m_{oben}$, entscheidet die Steuervorrichtung 3, dass eine Verarbeitung durch die Arbeitsvorrichtung 2 erfolgreich erfolgen kann.

In einer Variante kann das beschriebene System mit einem zweiten oder dritten System, das andere Parameter, wie Farbe oder Dichte oder Leitfähigkeit oder pH-Wert, etc. bestimmt, kombiniert werden, um die Eindeutigkeit und Zuverlässigkeit der Viskositätsmessung (quasi durch eine Kreuzkorrelation mit redundanten Daten) abzusichern und zu verbessern.

Ein Bediener des Systems hat die richtige Rezeptur anzuwählen. Wenn er absichtlich oder unabsichtlich eine falsche Rezeptur für ein anderes Produkt anwählt, ist naturgemäß eine fehlerfreie Verarbeitung des flüssigen Lebensmittelprodukts nicht garantiert.

Es sei angenommen, dass die Prozesslinie als Messvorrichtung 1 einen Promass 83 I aufweist. Selbstverständlich kann eine andere Vorrichtung verwendet werden. Messungen mit der Promass 83 I können kalibriert werden, indem Promass-Messpunkte für eine Schergeschwindigkeit von 5000 s$^{-1}$ gemäß der Ostwald-de-Waele-Beziehung bei bekanntem m und K auf eine Vergleichsviskosität, beispielsweise 500 s$^{-1}$, extrapoliert und mit einer rotationsrheometrischen Vergleichsmessung verglichen werden. Die Abweichung kann zur Kalibrierung (Verschiebung der Geraden in der doppelt-logarithmischen Darstellung) verwendet werden. Auch kann es vorteilhaft sein, die Promass-Messung um eine systembedingte Wandschergeschwindigkeit zu korrigieren. Zudem kann eine Temperaturkorrektur, beispielsweise zur Berücksichtigung der Abnahme der dynamischen Viskosität mit steigender Temperatur nach der Arrhenius-Andrade-Beziehung oder der Vogel-Fulcher-Tammann-Gleichung, Anwendung finden. Auch kann in dem Fall, dass Suspensionen verarbeitet werden sollen, eine Korrektur der gemessenen Viskosität gemäß dem Modell von Einstein, $\eta = \eta_0(1+2,5\Phi)$, wobei $\eta_0$ die Viskosität der Suspensionsflüssigkeit und $\Phi \ll 1$ der Feststoffvolumenanteil ist, vorgenommen werden.

## Patentansprüche

1. Verfahren zur Steuerung oder Regelung der Verarbeitung eines flüssigen Lebensmittelprodukts mit den Schritten

   Bereitstellen von Daten, die aus einer mathematischen Modellierung der Abhängigkeit der Viskosität flüssiger Lebensmittelprodukte von der Schergeschwindigkeit gewonnen werden;

   Messen der Viskosität des zu verarbeitenden flüssigen Lebensmittelprodukts bei einer vorbestimmten Schergeschwindigkeit an einer Messstelle;

   Bestimmen einer lokalen mittleren Schergeschwindigkeit $\bar{\gamma}$ mithilfe der Näherungsformel für einen Rohrleitungstransport

$$\bar{\gamma} = \frac{4\,\dot{V}}{\pi\,R^3}$$

   wobei die mittlere Schergeschwindigkeit mit $\dot{\gamma}$ und der Volumenstrom des flüssigen Lebensmittels mit V und der Radius eines von dem flüssigen Lebensmittel durchströmten Rohres mit R bezeichnet ist; Bestimmen der Viskosität des zu verarbeitenden flüssigen Lebensmittelprodukts an der Arbeitsvorrichtung auf der Grundlage der bestimmten mittleren Schergeschwindigkeit, der an der Messstelle gemessenen Viskosität und der bereitgestellten Daten; und
Steuern oder Regeln der Verarbeitung des flüssigen Lebensmittelprodukts an einer Arbeitsvorrichtung stromabwärts der Messstelle in Reaktion auf die an der Messstelle gemessene Viskosität und die an der Arbeitsvorrichtung bestimmte Viskosität und auf der Grundlage der Daten.

2. Das Verfahren gemäß Anspruch 1, in dem die Modellierung auf der Grundlage von Messungen der Viskosität der flüssigen Lebensmittelprodukte für zumindest eine Schergeschwindigkeit erfolgt.

3. Das Verfahren gemäß Anspruch 1 oder 2, in dem die Modellierung auf der Grundlage der Cox-Merz-Beziehung erfolgt.

4. Das Verfahren gemäß einem der vorhergehenden Ansprüche, in dem die Modellierung gemäß der Ostwald-de-Waele-Beziehung $\eta=K\dot{\gamma}^{m-1}$ erfolgt, wobei $\eta$ und $\dot{\gamma}$ die Viskosität und Schergeschwindigkeit bezeichnen und K und m die Konsistenz und den Fließindex bezeichnen.

5. Das Verfahren gemäß Anspruch 4, in dem die Daten Werte für m für eine Mehrzahl an flüssigen Lebensmittelprodukten umfassen, wobei das Verfahren das Bestimmen des Wertes von m für das flüssige Lebensmittelprodukt umfasst und das Steuern oder Regeln auf der Grundlage des bestimmten Wertes von m für das flüssige Lebensmittelprodukt erfolgt.

6. Das Verfahren gemäß Anspruch 5, in dem der Wert von m für das zu verarbeitende flüssige Lebensmittelprodukt von einem Nutzer in eine Einrichtung zur Steuerung oder Regelung der Verarbeitung des flüssigen Lebensmittelprodukts eingegeben wird.

7. Das Verfahren gemäß Anspruch 5 oder 6, in dem das Verarbeitung des flüssigen Lebensmittelprodukts an der Arbeitsvorrichtung gestoppt wird, wenn der bestimmte Wert für m für das flüssige Lebensmittelprodukt eine erste vorbestimmte Schranke überschreitet und/oder eine zweite vorbestimmte Schranke unterschreitet.

8. Das Verfahren gemäß Anspruch 7, in dem die bereitgestellten Daten Datensätze für Rezepturen für verschiedene Arten von flüssigen Lebensmittelprodukten umfassen und die erste und zweite vorbestimmte Schranke aus einem der Datensätze ausgelesen wird.

9. Das Verfahren gemäß einem der vorhergehenden Ansprüche, in dem in Reaktion auf das Messen der Viskosität des flüssigen Lebensmittelprodukts ein Volumenstrom des flüssigen Lebensmittelprodukts erhöht oder vermindert wird und/oder ein Druck des Volumenstroms des flüssigen Lebensmittelprodukts erhöht oder vermindert wird und/oder das flüssige Lebensmittelprodukts verdünnt oder verdickt wird.

10. Das Verfahren gemäß einem der vorhergehenden Ansprüche, in dem die Arbeitsvorrichtung eine Kurzzeit-Erhitzungsvorrichtung ist.

11. Das Verfahren gemäß einem der vorhergehenden Ansprüche, in dem das flüssige Lebensmittelprodukt ein Fruchtsaft, eine Fruchtsuspension, ein Gemüsesaft oder eine Gemüsesuspension ist.

12. Das Verfahren gemäß einem der vorhergehenden Ansprüche, in dem die gemessene Viskosität des zu verarbeitenden flüssigen Lebensmittelprodukts eine Temperaturkorrektur erfährt und/oder die Daten, die aus einer mathematischen Modellierung der Abhängigkeit der Viskosität flüssiger Lebensmittelprodukte von der Schergeschwindigkeit gewonnen werden, eine Temperaturkorrektur enthalten.

13. Das Verfahren gemäß einem der vorhergehenden Ansprüche, in dem das flüssigen Lebensmittelprodukt als Suspension vorliegt und die gemessene Viskosität des zu verarbeitenden flüssigen Lebensmittelprodukts eine Korrektur gemäß dem Feststoffvolumenanteil der Suspension erfährt und/oder die Daten, die aus einer mathematischen Modellierung der Abhängigkeit der Viskosität flüssiger Lebensmittelprodukte von der Schergeschwindigkeit gewonnen werden, eine Korrektur gemäß dem Feststoffvolumenanteil der Suspension enthalten, wobei die Korrektur insbesondere gemäß dem Modell nach Einstein erfolgt.

14. Steuer- oder Regelvorrichtung für eine Anlage zur Verarbeitung eines flüssigen Lebensmittelprodukts, umfassend
einen Datenspeicher zum Speichern von Daten, die aus einer mathematischen Modellierung der Abhängigkeit der Viskosität flüssiger Lebensmittelprodukte von der Schergeschwindigkeit gewonnen werden; und
eine Steuereinheit zum Steuern oder Regeln der Verarbeitung des flüssigen Lebensmittelprodukts an einer Arbeitsvorrichtung stromabwärts einer Messstelle in Reaktion auf eine an der Messstelle bei einer vorbestimmten Schwergeschwindigkeit gemessenen Viskosität des zu verarbeitenden Lebensmittelprodukts und auf der Grundlage der gespeicherten Daten, einer mithilfe der Näherungsformel für einen Rohrleitungstransport

$$\bar{\dot\gamma} = \frac{4\,\dot V}{\pi\,R^3}$$

bestimmten lokalen mittleren Schergeschwindigkeit $\bar{\dot\gamma}$, wobei die mittlere Schergeschwindigkeit mit $\dot\gamma$ und der Volumenstrom des flüssigen Lebensmittels mit $\dot V$ und der Radius eines von dem flüssigen Lebensmittel durchströmten Rohres mit R bezeichnet ist; und

der an der Arbeitsvorrichtung auf der Grundlage der bestimmten mittleren Schergeschwindigkeit, der an der Messstelle gemessenen Viskosität und der bereitgestellten Daten bestimmten Viskosität des zu verarbeitenden flüssigen Lebensmittelprodukts.

15. Verarbeitungsvorrichtung für die Verarbeitung eines flüssigen Lebensmittelprodukts, umfassend
eine Messstelle zum Messen der Viskosität des flüssigen Lebensmittelprodukts bei einer vorbestimmten Schergeschwindigkeit des flüssigen Lebensmittelprodukts;
eine Arbeitsvorrichtung zum Verarbeitung des flüssigen Lebensmittelprodukts, wobei die Arbeitsvorrichtung stromabwärts der Messstelle vorgesehen ist; und
die Steuer- oder Regelvorrichtung gemäß Anspruch 14.

16. Die Verarbeitungsvorrichtung von Anspruch 15, in der die Arbeitsvorrichtung eine Kurzzeit-Erhitzungsvorrichtung zum Kurzzeiterhitzen eines Fruchtsafts, einer Fruchtsuspension, eines Gemüsesafts oder einer Gemüsesuspension als das flüssige Lebensmittelprodukt ist.

**Claims**

1. Method for controlling or regulating the processing of a liquid foodstuffs product, comprising the steps of:

    providing data which are obtained from a mathematical modelling of the dependence of the viscosity of liquid foodstuffs products on the shear velocity;
    measuring the viscosity of the liquid foodstuffs product to be processed at a predetermined shear velocity at a measuring point;
    determining a local mean shear velocity $\bar{\dot\gamma}$ by means of the approximation formula for a pipeline transport

$$\bar{\dot\gamma} = \frac{4\,\dot V}{\pi\,R^3}$$

in which the mean shear velocity is denoted by $\dot\gamma$ and the volume flow of the liquid foodstuff is denoted by $\dot V$ and the radius of a pipe through which the liquid foodstuff flows is denoted by R; determining the viscosity of the liquid foodstuffs product to be processed at the working device on the basis of the determined mean shear velocity, the viscosity measured at the measuring point, and the data provided; and
controlling or regulating the processing of the liquid foodstuffs product at a working device downstream of the measuring point in response to the viscosity measured at the measuring point and the viscosity determined at the working device and on the basis of the data.

2. The method according to claim 1, in which the modelling is carried out on the basis of measurements of the viscosity of the liquid foodstuffs products for at least one shear velocity.

3. The method according to claim 1 or 2, in which the modelling is carried out on the basis of the Cox-Merz relationship.

4. The method according to one of the preceding claims, in which the modelling is carried out according to the Ostwald-de-Waele relationship $\eta=K\dot\gamma^{m-1}$ where $\eta$ and $\dot\gamma$ denote the viscosity and shear velocity and K and m denote the consistency and the flow index.

5. The method according to claim 4, in which the data include values for m for a plurality of liquid foodstuffs products, wherein the method includes the determination of the value of m for the liquid foodstuffs product and the control or regulation is carried out on the basis of the determined value of m for the liquid foodstuffs product.

6. The method according to claim 5, in which the value of m for the liquid foodstuffs product to be processed is input by a user into a device for controlling or regulating the processing of the liquid foodstuffs product.

7. The method according to claim 5 or 6, in which the processing of the liquid foodstuffs product at the working device is stopped if the determined value for m for the liquid foodstuffs product exceeds a first predetermined limit and/or falls below a second predetermined limit.

**8.** The method according to claim 7, in which the data provided includes data sets for formulations for various types of liquid foodstuffs products and the first and second predetermined limits are read out from one of the data sets.

**9.** The method according to one of the preceding claims, in which in response to the measurement of the viscosity of the liquid foodstuffs product a volume flow of the liquid foodstuffs product is increased or reduced and/or a pressure of the volume flow of the liquid foodstuffs product is increased or reduced and/or the liquid foodstuffs product is diluted or thickened.

**10.** The method according to one of the preceding claims, in which the working device is a short-time heating device.

**11.** The method according to one of the preceding claims, in which the liquid foodstuffs product is a fruit juice, a fruit suspension, a vegetable juice or a vegetable suspension.

**12.** The method according to one of the preceding claims, in which the measured viscosity of the liquid foodstuffs product to be processed undergoes a temperature correction and/or the data which are obtained from a mathematical modelling of the dependence of the viscosity of liquid foodstuffs products on the shear velocity contain a temperature correction.

**13.** The method according to one of the preceding claims, in which the liquid foodstuffs product exists as a suspension and the measured viscosity of the liquid foodstuffs product to be processed undergoes a correction according to the solids volume fraction of the suspension and/or the data which are obtained from a mathematical modelling of the dependence of the viscosity of liquid foodstuffs products on the shear velocity contain a correction according to the solids volume fraction of the suspension, wherein the correction is performed in particular according to the Einstein model.

**14.** Control or regulating device for a plant for processing a liquid foodstuffs product, comprising a data memory for storing data which are obtained from a mathematical modelling of the dependence of the viscosity of liquid foodstuffs products on the shear velocity; and a control unit for controlling or regulating the processing of the liquid foodstuffs product at a working device downstream of a measuring point in response to a viscosity of the foodstuffs product to be processed measured at a predetermined shear velocity at the measuring point and on the basis of the stored data, of a local mean shear velocity $\bar{\dot{\gamma}}$ determined with the

aid of the approximation formula for a pipeline transport

$$\bar{\dot{\gamma}} = \frac{4\,\dot{V}}{\pi\,R^3}$$

in which the mean shear velocity is denoted by $\dot{\gamma}$ and the volume flow of the liquid foodstuff is denoted by $\dot{V}$ and the radius of a pipe through which the liquid foodstuffs flows is denoted by R; and of the viscosity of the liquid foodstuffs product to be processed determined at the working device on the basis of the determined mean shear velocity, of the viscosity measured at the measuring point, and of the prepared data.

**15.** Processing device for processing a liquid foodstuffs product, comprising a measuring point for measuring the viscosity of the liquid foodstuffs product at a predetermined shear velocity of the liquid foodstuffs product; a working device for processing the liquid foodstuffs product, wherein the working device is provided downstream of the measuring point; and the control or regulating device according to claim 14.

**16.** The processing device of claim 15, in which the working device is a short-time heating device for briefly heating a fruit juice, a fruit suspension, a vegetable juice or a vegetable suspension as the liquid foodstuffs product.

**Revendications**

**1.** Procédé pour commander ou réguler le traitement d'un produit alimentaire liquide, comprenant les étapes suivantes mise à disposition de données, qui sont obtenues à partir d'une modélisation mathématique de la relation de dépendance entre la viscosité de produits alimentaires liquides et le taux de cisaillement ; mesure de la viscosité du produit alimentaire liquide à traiter pour un taux de cisaillement prédéterminé en un point de mesure ; détermination d'un taux de cisaillement moyen $\bar{\dot{\gamma}}$ local, à l'aide de la formule d'approximation pour un transport par conduite tubulaire

$$\bar{\dot{\gamma}} = \frac{4\dot{V}}{\pi R^3}$$

le taux de cisaillement moyen étant désigné par $\dot{\gamma}$ et

le débit volumique du produit alimentaire liquide par V̇, et le rayon d'un tube traversé par l'écoulement du produit alimentaire liquide étant désigné par R ; détermination de la viscosité du produit alimentaire liquide à traiter au niveau du dispositif de travail, sur la base du taux de cisaillement moyen ayant été déterminé, de la viscosité mesurée au niveau du point de mesure, et desdites données mises à disposition ; et commande ou régulation du processus de traitement du produit alimentaire liquide au niveau d'un dispositif de travail en aval du point de mesure, en réaction à la viscosité mesurée au niveau dudit point de mesure, à la viscosité déterminée au niveau du dispositif de traitement, et sur la base desdites données.

2. Le procédé selon la revendication 1, d'après lequel la modélisation s'effectue sur la base de mesures de la viscosité des produits alimentaires liquides pour au moins un taux de cisaillement.

3. Le procédé selon la revendication 1 ou la revendication 2, d'après lequel la modélisation s'effectue sur la base de la règle de Cox-Merz.

4. Le procédé selon l'une des revendications précédentes, d'après lequel la modélisation s'effectue sur la base de la loi de Ostwald-de-Waele $\eta = K\dot{\gamma}^{m-1}$, $\eta$ et $\dot{\gamma}$ désignant la viscosité et le taux de cisaillement, et K et m l'indice de consistance et l'index d'écoulement.

5. Le procédé selon la revendication 4, d'après lequel les données comprennent des valeurs pour m pour une pluralité de produits alimentaires liquides, le procédé comprenant la détermination de la valeur de m pour le produit alimentaire liquide, et la commande ou la régulation sur la base de la valeur ayant été déterminée pour m pour le produit alimentaire liquide considéré.

6. Le procédé selon la revendication 5, d'après lequel la valeur de m pour le produit alimentaire liquide à traiter, est introduite par un utilisateur dans un dispositif de commande ou de régulation du traitement du produit alimentaire liquide.

7. Le procédé selon la revendication 5 ou la revendication 6, d'après lequel on stoppe le traitement du produit alimentaire liquide dans le dispositif de traitement, lorsque la valeur déterminée pour m pour le produit alimentaire liquide dépasse un premier seuil prédéterminé et/ou passe sous un deuxième seuil prédéterminé.

8. Le procédé selon la revendication 7, d'après lequel les données mises à disposition comprennent des jeux de données pour des recettes pour différents types de produits alimentaires liquides, et le premier et le deuxième seuil prédéterminé sont extraits de l'un des jeux de données.

9. Le procédé selon l'une des revendications précédentes, d'après lequel, en réaction à la mesure de la viscosité du produit alimentaire liquide, on augmente ou diminue un débit volumique du produit alimentaire liquide, et/ou on augmente ou diminue une pression de l'écoulement du produit alimentaire liquide, et/ou on dilue ou on épaissit le produit alimentaire liquide.

10. Le procédé selon l'une des revendications précédentes, d'après lequel le dispositif de travail est un dispositif de chauffage momentané.

11. Le procédé selon l'une des revendications précédentes, d'après lequel le produit alimentaire liquide est un jus de fruits, une suspension buvable de fruits, un jus de légumes ou une suspension buvable de légumes.

12. Le procédé selon l'une des revendications précédentes, d'après lequel la viscosité mesurée du produit alimentaire liquide à traiter subit une correction de température, et/ou les données, qui sont obtenues à partir d'une modélisation mathématique de la relation de dépendance entre la viscosité de produits alimentaires liquides et le taux de cisaillement, renferment une correction de température.

13. Le procédé selon l'une des revendications précédentes, d'après lequel le produit alimentaire liquide se présente sous la forme d'une suspension, et la viscosité mesurée du produit alimentaire liquide à traiter subit une correction conformément à la part de volume de substances solides de la suspension, et/ou les données, qui sont obtenues à partir d'une modélisation mathématique de la relation de dépendance entre la viscosité de produits alimentaires liquides et le taux de cisaillement, renferment une correction conformément à la part de volume de substances solides de la suspension, la correction s'effectuant en particulier conformément au modèle selon Einstein.

14. Dispositif de commande ou de régulation pour une installation de traitement d'un produit alimentaire liquide, comprenant
une mémoire de données pour mémoriser des données, qui sont obtenues à partir d'une modélisation mathématique de la relation de dépendance entre la viscosité de produits alimentaires liquides et le taux de cisaillement ; et
une unité de commande pour commander ou réguler le traitement du produit alimentaire liquide dans un dispositif de travail en aval d'un point de mesure, en réaction à une viscosité du produit alimentaire à traiter mesurée au niveau du point de mesure pour un taux de cisaillement prédéterminé, et sur la base des données mémorisées, d'un taux de cisaillement moyen $\bar{\dot{\gamma}}$ local déterminé à l'aide de la formule d'approximation pour un transport par conduite tubulaire

$$\bar{\dot{\gamma}} = \frac{4\dot{V}}{\pi R^3}$$

le taux de cisaillement moyen étant désigné par $\dot{\gamma}$ et le débit volumique du produit alimentaire liquide par $\dot{V}$, et le rayon d'un tube traversé par l'écoulement du produit alimentaire liquide étant désigné par R, et de la viscosité du produit alimentaire liquide à traiter, déterminée au niveau du dispositif de travail sur la base du taux de cisaillement moyen, de la viscosité mesurée au niveau du point de mesure et des données mises à disposition.

**15.** Dispositif de traitement pour le traitement d'un produit alimentaire liquide, comprenant
un point de mesure pour mesurer la viscosité du produit alimentaire liquide pour un taux de cisaillement prédéterminé du produit alimentaire liquide ;
un dispositif de travail pour le traitement du produit alimentaire liquide, le dispositif de travail étant prévu en aval du point de mesure ; et
le dispositif de commande ou de régulation selon la revendication 14.

**16.** Le dispositif de traitement selon la revendication 15, dans lequel le dispositif de travail est un dispositif de chauffage momentané pour chauffer momentanément un jus de fruits, une suspension buvable de fruits, un jus de légumes ou une suspension buvable de légumes en tant que produit alimentaire liquide.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9906816 A